# EUROPEAN PATENT SPECIFICATION

(11) **EP 4 169 798 B1**
(45) Date of publication and mention of the grant of the patent: **01.10.2025**
(21) Application number: 20941856.5
(22) Date of filing: 22.06.2020
(51) Int. Cl.: B61D 17/02, B61F 3/14

(54) **RAILWAY VEHICLE AND CONTROL METHOD FOR MOVABLE COVER OF RAILWAY VEHICLE**
SCHIENENFAHRZEUG UND STEUERUNGSVERFAHREN FÜR EINEN BEWEGLICHEN DECKEL EINES SCHIENENFAHRZEUGES
VÉHICULE FERROVIAIRE ET PROCÉDÉ DE COMMANDE POUR CAPOT MOBILE DE VÉHICULE FERROVIAIRE

(43) Date of publication of application: 26.04.2023
(73) Proprietor: Hitachi, Ltd., Chiyoda-ku Tokyo 100-8280 (JP)
(72) Inventor: MATSUI, Akitoshi, Tokyo 100-8280 (JP); YAMAGUCHI, Takeshi, Tokyo 100-8280 (JP); MORITA, Kiyoshi, Tokyo 100-8280 (JP); HAYASHI, Tomoo, Tokyo 100-8280 (JP)
(74) Representative: MERH-IP Matias Erny Reichl Hoffmann Patentanwälte PartG mbB
(86) International application number: PCT/JP2020/024408
(87) International publication number: WO 2021/260769

(56) References cited:
- CN-A- 108 482 412
- DE-A1- 2 542 780
- JP-A- 2006 021 672
- JP-A- 2009 029 256
- JP-A- 2014 101 084
- JP-A- 2014 101 084
- JP-A- 2018 500 217
- JP-A- 2018 500 217
- KR-B1- 101 463 795
- US-B2- 9 908 538

## Description

### Technical Field

The present invention relates to a railway vehicle and a method of controlling movable covers for a railway vehicle, and more particularly, to a railway vehicle configured including covers to cover around bogies supporting the body of the railway vehicle and a method of controlling the covers.

### Background Art

Reducing energy consumption during railway vehicle operation has been becoming increasingly important for environmental and cost-reduction reasons. The amount of energy consumed in railway systems is known to be relatively small compared with the amounts consumed in road vehicle and aviation systems, but further energy saving is desired.

When a railroad vehicle is running, a considerable amount of energy is consumed to counter the running resistance. In the case of a high-speed train, in particular, air resistance accounts for a most part of the running resistance. To reduce aerodynamic drag, measures such as extending head shapes, adopting side skirts and reducing steps have been taken.

However, since trains are generally required to be capable of running on curved tracks, the bogies of trains require space in which the bogies can turn along curved tracks. The cavities (hollow portions) that provide such space increase aerodynamic drag.

In patent literature 1, a technology in which opening of a cavity accommodating a bogie of a railway vehicle is covered with a mesh cover is described.

In patent literature 2, a technology in which a bogie is provided with covers covering sides and a bottom of a cavity portion is described.

In patent literature 3, a device attached to a bottom portion of a train's bogie area is described, which effects the snow accumulation in a bogie area of a train.

In patent literature 4, a railway vehicle is described with a space part formed in a vehicle lower part of a railroad vehicle and in which a carriage having a wheel is disposed, and a covering device disposed in the front and the rear in a vehicle longitudinal direction.

In patent literature 5, A rail vehicle is described including a concealed undercarriage, particularly a bogie, wherein the covering or fairing comprises at least side elements that are arranged along the rail vehicle on the sides of the undercarriage and a bottom element that is arranged on the underside of the undercarriage, where the side elements are fixedly connected to the carriage body of the rail vehicle.

### Citation List

### Patent Literature

Patent literature 1: Publication of Japanese Patent No. 4331025
Patent literature 2: Publication of Japanese Patent No. 6193303
Patent literature 3: Publication of JP 2018 500217 A
Patent literature 4: Publication of JP 2014 101084 A
Patent literature 5: Publication of US 9 908 538 B2

### Summary Of Invention

### Technical Problem

To suppress air flowing into a cavity around a bogie, it is effective, as described in patent literature 1, to cover open portions of the cavity as much as possible and reduce air-flow speed via meshes. However, when a railway vehicle runs, the bogies of the railway vehicle turn following the rails, so that the covers are required to respond to the movement.

For this, there is a method in which, as described in patent literature 2, covers are fixed to bogies. Then, the covers move together with the bogies, so that flowing of air into cavities around the bogies can be suppressed. On the other hand, it becomes necessary to remove the covers when bogie maintenance is performed.

In view of the above problems, an object of the present invention is to provide a railway vehicle and a method of controlling movable covers for a railway vehicle which make it possible to save energy by suppressing air flows into space portions around bogies of a running railway vehicle and make bogie maintenance easy.

### Solution to Problems

The above problem is solved by the independent claims and preferred developments are set forth by the dependent claims. In particular, a typical railway vehicle according to the present invention includes a body, a bogie to support the body, and a movable cover device. The body includes a passenger room provided above an underframe, the underframe making up a floor, and an underfloor portion provided below the underframe. The underfloor portion is provided with a space portion to accommodate the bogie. The space portion is formed in space partitioned by an end-portion closing plate rising in the height direction from an end part on the bogie side of each underside closing plate which is provided downward of the underframe to be approximately in parallel with the underframe and the underside of the underframe. The movable cover device includes a movable cover which covers the underside of the space portion at least partly from a lower end part of an end-portion closing plate, an accommodation part to accommodate the movable cover, and a drive device to drive the movable cover. Furthermore, the movable cover including a pair of bottom covers approximately fully covering a bottom part of the space portion and a slit portion for avoiding interference with a wheel that the bogie is provided with.

### Advantageous Effects of Invention

The railway vehicle and the method of controlling movable covers for a railway vehicle according to the present invention make it possible to save energy by suppressing air flows into space portions around bogies of a running railway vehicle and make bogie maintenance easy.

### Brief Description Of Drawings

Fig. 1 is a side view of an example of a bogie part of a railway vehicle without any movable cover device.
Fig. 2 is a bottom view of an example of a bogie part of a railway vehicle without any movable cover device.
Fig. 3 is a bottom view of a bogie part of a railway vehicle according to a first example relevant for the technical understanding of the present invention.
Fig. 4 is a sectional view taken along line A-A in Fig. 3 (the first example relevant for the technical understanding).
Fig. 5 is a sectional view taken along line B-B in Fig. 3 (the first example relevant for the technical understanding).
Fig. 6 is a bottom view of a bogie part of a railway vehicle according to a second example relevant for the technical understanding of the present invention.
Fig. 7 is a sectional view taken along line C-C in Fig. 6 (the second example relevant for the technical understanding).
Fig. 8 is a side view of a bogie part of a railway vehicle according to a third example relevant for the technical understanding of the present invention.
Fig. 9 is a sectional view taken along line D-D in Fig. 8 (the third example relevant for the technical understanding).
Fig. 10 is a bottom view of a bogie part of a railway vehicle according to a fourth embodiment of the present invention.
Fig. 11 is a plan view of a bottom cover according to the fourth embodiment of the present invention.
Fig. 12 is a sectional view taken along line F-F in Fig. 11 (the fourth embodiment).
Fig. 13 is a sectional view taken along line E-E in Fig. 10 (the fourth embodiment).
Fig. 14 is a bottom view of a bogie part of a railway vehicle according to a fifth embodiment of the present invention.
Fig. 15 is a sectional view taken along line G-G in Fig. 14 (the fifth embodiment).
Fig. 16 is a bottom view of a bogie part of a railway vehicle according to a sixth embodiment of the present invention.
Fig. 17 is an example of a flowchart showing a method of controlling cover drive devices applied to a railway vehicle according to the present invention.

### Description Of Embodiments and Examples

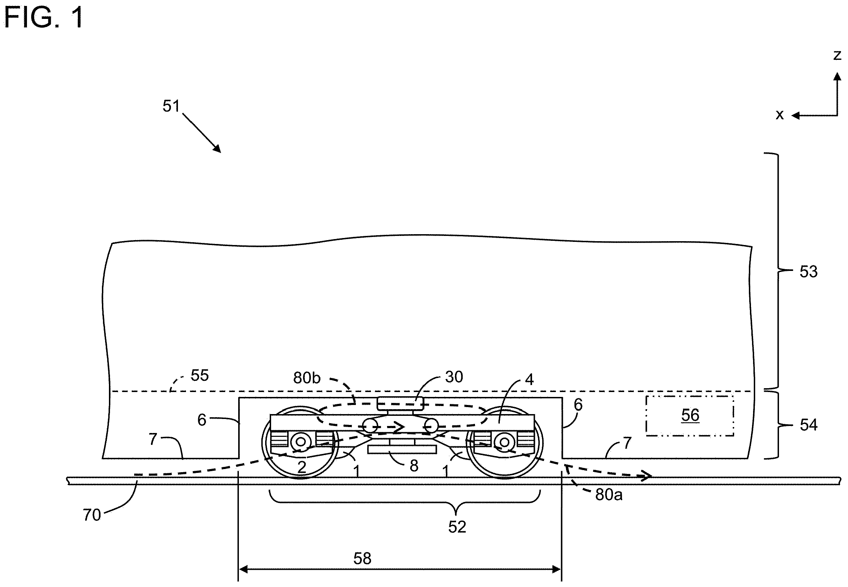

Forms of implementation of the present invention will be described with reference to Figs. 1 to 17. First, directions in each drawing will be defined. The direction of running or the longitudinal direction (front-rear direction) of a railway vehicle 51 is defined as x direction, the width direction (left-right direction) of the railway vehicle 51 is defined as y direction, and the height direction (upper-lower direction) of the railway vehicle 51 is defined as z direction. The directions may hereinafter be referred to simply as the x direction, the y direction and the z direction.

### Railway Vehicle without Movable Cover Device

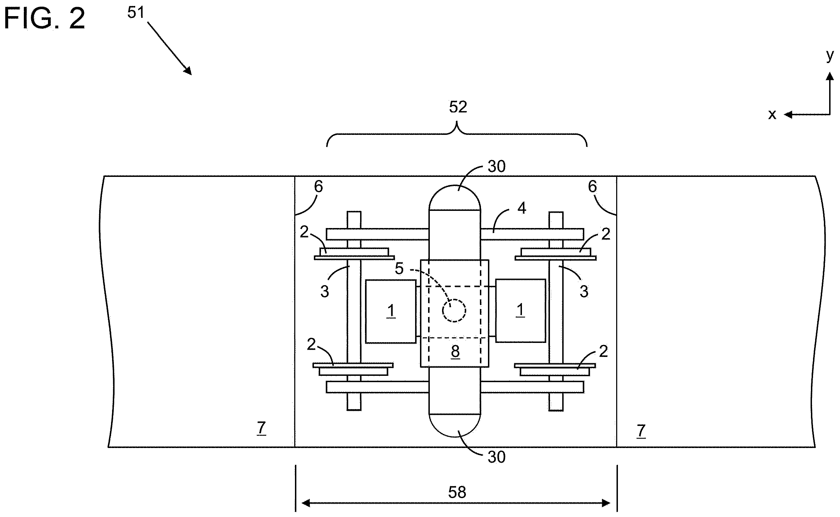

Fig. 1 is a side view of an example of a bogie part of a railway vehicle without any movable cover device, and Fig. 2 is a bottom view.

The railway vehicle 51 has a body and bogies 52, and the body is, at both end parts thereof in the x direction, supported by the bogies 52 which move along a railway track 70. The body of the railway vehicle 51 includes a passenger room 53 located, in the z direction, above an underframe 55 making up a floor and an underfloor portion 54 located, in the z direction, below the underframe 55.

The underfloor portion 54 includes underside closing plates 7 covering the underside facing the railway track 70 of the railway vehicle 51 and end-portion closing plates 6 approximately vertically rising continuously from the underside closing plates 7. Furthermore, in the underfloor portion 54, space portions (cavity portions) 58 where the bogies 52 are placed are provided. The space portions 58 are each formed in space partitioned by the underside of the underframe 55 located above the bogies 52 and the end-portion closing plates 6 provided on both sides in the x direction (front-rear direction) of each bogie 52. An electric device 56 is provided in a portion where an underside closing plate 7 is provided of the underfloor portion 54.

Each bogie 52 is placed in a space portion 58 to be turnable within a horizontal plane with respect to the underframe 55 about a center pin 5 extending along the z direction. The bogie 52 includes a bogie frame 4, axles 3 held rotatably with respect to the bogie frame 4, wheels 2 fixed to both end parts in the y direction of each axle 3, and main motors 1 supported by the bogie frame 4. The two axles 3 are provided on both sides in the front-rear direction (in the x direction) of the bogie 52. The bogie 52 supports the underframe 55 via air springs 30 provided, to be around the center in the x direction, on both sides in the y direction. A windbreak plate 8 to suppress, during running, the wind hitting the main motors 1, etc. the bogie 52 is provided with is provided under a central part in the x direction of the bogie frame 4.

In cases where no movable cover device is provided, when the railway vehicle 51 runs at high speed, an air flow 80a enters, as shown in Fig. 1, the space portion 58 and hits the bogie 52. The air flow 80a having become turbulent by hitting the bogie 52 hits the end-portion closing plate 6 provided in a rear portion in the x direction of the bogie 52. Furthermore, an air flow (swirl) 80b along and around the y axis is generated in an upper portion in the z direction of the interior of the space portion 58. These air flow 80a flowing into the space portion 58 and air flow 80b generated inside the space portion 58 make up air resistance against the running direction of the railway vehicle 51, and the railway vehicle 51 running at high speed is caused to consume a large running energy.

### First Example relevant for the Technical Understanding

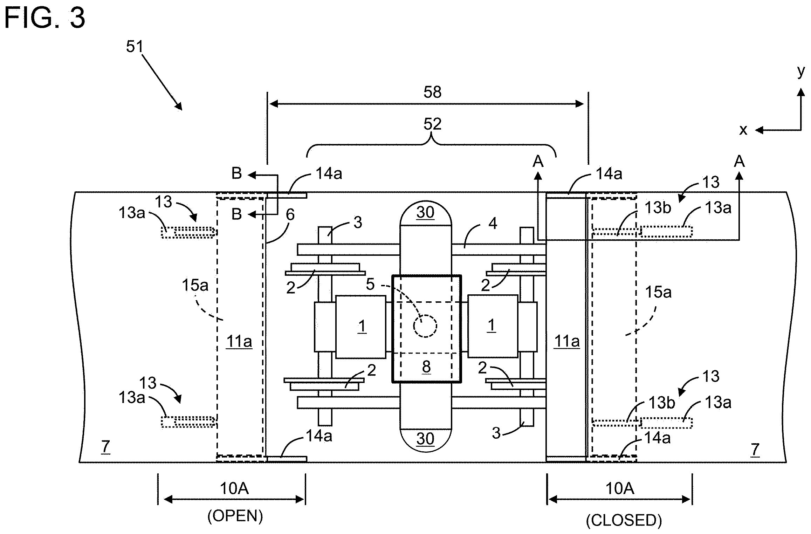

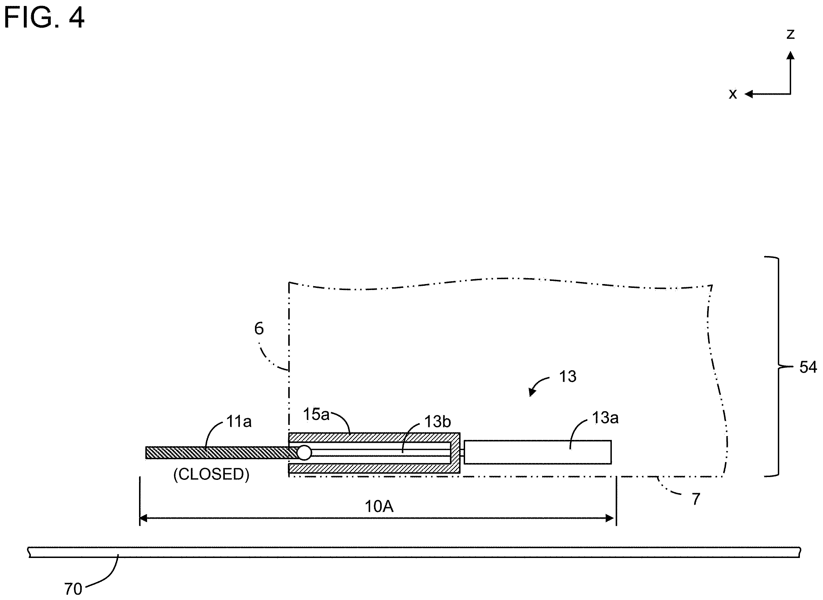

Fig. 3 is a bottom view of a bogie part of a railway vehicle according to a first example relevant for the technical understanding of the present invention. Fig. 4 is a sectional view taken along line A-A in Fig. 3 (the first example relevant for the technical understanding). According to the first example relevant for the technical understanding, compared with the railway vehicle, shown in Figs. 1 and 2, not provided with any movable cover device, the railway car is additionally provided with configurations of movable cover devices 10A. In Fig. 3, the same parts as those shown in Figs. 1 and 2 are denoted by the same reference signs, and the description of such parts is omitted unless particularly required.

As shown in Figs. 3 and 4, the movable cover devices 10A each include a movable cover 11a to cover the underside of the space portion 58, an accommodation part 15a to accommodate the movable cover 11a, and drive devices 13 to drive the movable cover 11a.

A pair of movable covers 11a are placed at the height of the underside closing plates 7, being as high as a lower part of the space portion 58. Also, the movable covers 11a move, in the x direction, in a manner of horizontally projecting from the end-portion closing plates 6 in the front-rear direction of the space portion 58 into the space portion 58. Also, in the y direction, the movable covers 11a cover the entire width of the space portion 58.

Each accommodation part 15a is provided, to be approximately in parallel with the underframe 55 (see Fig. 1), in a portion on the side of an underside closing plate 7 of the underfloor portion 54. The accommodation part 15a is provided, near the joint between a lower end part of an end-portion closing plate 6 and an underside closing plate 7, at a height to be approximately as high as the underside closing plate 7. When opening the space portion 58, the movable covers 11a are accommodated into the accommodation parts 15a.

Each drive device 13 is provided in a portion on the side of an underside closing plate 7 of the underfloor portion 54 and makes up a cylinder system including a cylinder 13a and a rod 13b connected with the cylinder 13a. One end of the rod 13b is connected to a side part (a side part opposite to the bogie 52 side) of the movable cover 11a.

In Fig. 3, the movable cover 11a of the movable cover device 10A on the left side is shown in a state not covering the space portion 58 where the bogie 52 is provided (in a state with the space portion 58 open). The movable cover 11a of the movable cover device 10A shown on the right side in Fig. 3 is in a state covering the space portion 58 where the bogie 52 is provided (in a state with the space portion 58 closed). This is an example representation for the sake of explanation, and the movable cover 11a on each side can be put in a covering state or in a not-covering state. Indications of "(OPEN)" and "(CLOSED)" in the subsequent drawings indicate the above-described states.

As shown in Fig. 3, the total dimension in the x direction of the pair of moving covers 11a is smaller than the dimension in the x direction of the space portion 58. Therefore, the movable covers 11a of the movable cover devices 10A cover the space portion 58 not entirely but partly (both end portions in the x direction). In a covering state, the movable covers 11a cover, as viewed from the bottom side, both end portions in the x direction of the bogie frame 4 and portions of the wheels 2. At this time, the movable covers 11a are in a state of covering to an extent not interfering with the wheels 2.

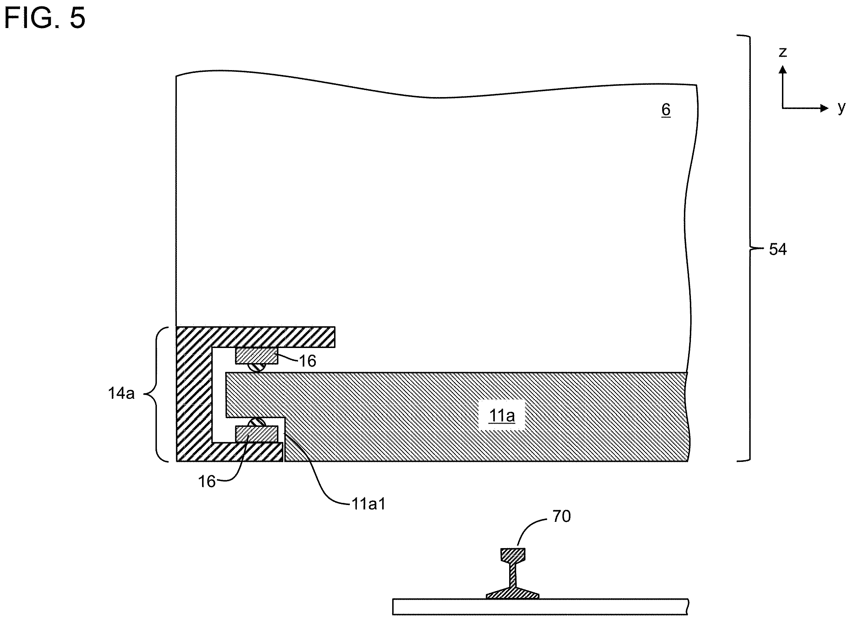

As shown in Fig. 5, each movable cover 11a is held at each end portion in the y direction by a guide rail 14a to be slidable in the x direction. The movable covers 11a are driven in the x direction by sliding the cylinders 13a of the drive devices 13. Each guide rail 14a is provided, as shown in Fig. 3, to extend along the x direction at near an end portion in the y direction of the space portion 58 and is U-shaped, being open toward a central portion in the y direction. Each end portion in the y direction of each movable cover 11a is, as shown in Fig. 5, held from above and below, each via a sliding part 16, by a guide rail 14a. The sliding parts 16 are for enabling smooth sliding by reducing friction between component members. Also, providing an inner step 11a1 in the rail-held portion on each side of each movable cover 11a makes alignment in the z direction possible between the bottom surfaces of the movable cover 11a and guide rail 14a.

The guide rails 14a configured as described above can suppress, even when pressure fluctuations caused by the air flow 80a are applied to the movable covers 11a, vibrations in the z direction of the movable covers 11a and generation of noise attributable to vibrations. This makes it possible to extend the replacement cycle of the movable covers 11a and suppress noise generation caused by vibrations of the movable covers 11a.

The railway vehicle 51 provided with the movable cover devices 10A configured as described above can reduce the open portion of each space portion 58 by partly closing the space portion 58, with the movable covers 11a, from both sides in the x direction of the space portion 58. Therefore, the air flow 80a flowing, when the railway vehicle 51 runs at high speed, below an underside closing plate 7 toward the space portion 58 advances along the surface of a movable cover 11a provided, on the upstream side, to be continuously from the underside closing plate 7. The air flow 80a then further advances, skipping a portion of the space portion 58, along the underside of the windbreak plate 8 the bogie 52 is provided with, then, again skipping a portion of the space portion 58, flows away toward the other movable cover 11a and the underside closing plate 7 on the downstream side.

In this way, the amount of air flowing into the space portion 58 is reduced, so that both the air flow 80a passing the bogie 52 and hitting the end-portion closing plate 6 on the downstream side and the air flow 80b swirling in an upper portion of the space portion 58 can be reduced. This makes it possible to reduce the air resistance against and the running energy used by the railway vehicle 51 so as to promote energy saving.

Furthermore, when the railway vehicle runs at a speed higher than a predetermined speed, the movable cover 11a of each movable cover device 10A is made to partly close the space portion 58. This reduces the air resistance attributable to each space portion 58 where a bogie 52 of the railway vehicle 51 is accommodated. On the other hand, when the railway vehicle 51 runs at a speed lower than a predetermined speed or is stopped, the movable cover 11a of each movable cover device 10A leaves the space portion 58 open. This allows easy maintenance and inspection of the bogie 52.

### Second Example relevant for the Technical Understanding

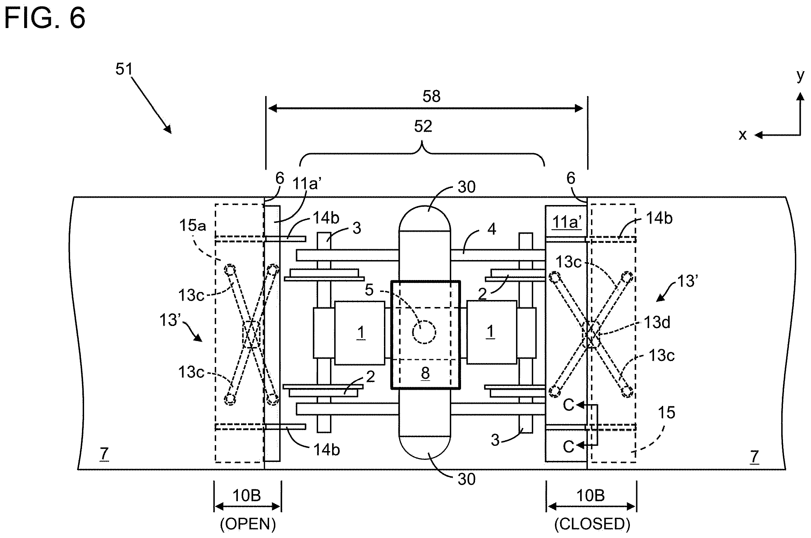

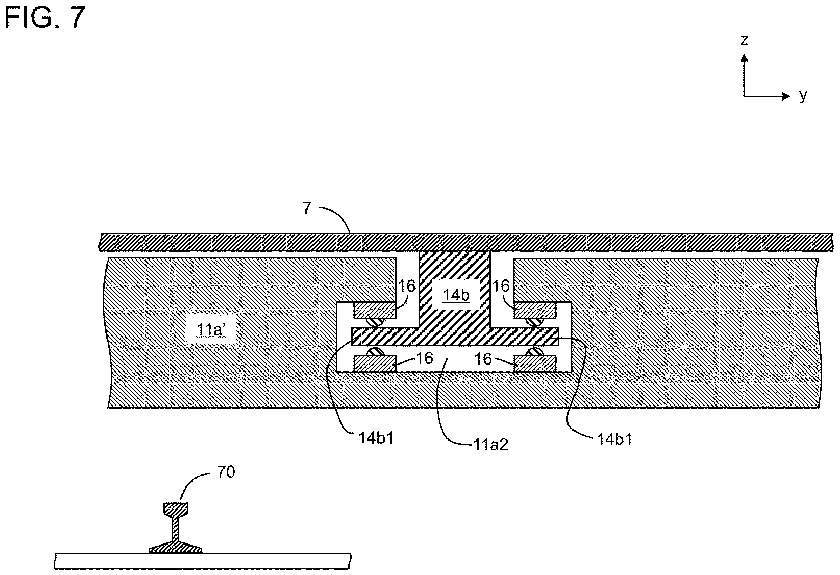

Fig. 6 is a bottom view of a bogie part of a railway vehicle according to a second example relevant for the technical understanding of the present invention, and Fig. 7 is a sectional view taken along line C-C in Fig. 6 (the second example relevant for the technical understanding). The second example relevant for the technical understanding will be described mainly about differences from the first example relevant for the technical understanding, the same parts as those for the first example relevant for the technical understanding will be denoted by the same reference signs, and the description of such parts will be omitted unless particularly required.

Movable cover devices 10B according to the second example relevant for the technical understanding each include a movable cover 11a' to cover the underside of a space portion 58, an accommodation part 15b to accommodate the movable cover 11a', and a drive device 13' to drive the movable cover 11a'. The drive device 13' is of a spider system and includes a pair of arms 13c and an arm drive device 13d. In the spider system, the two arms 13c are joined at around the arm centers and, by changing the angles of the two arms 13c, the relative positions (positions in the x direction) of parts connected to end parts of the arms 13c can be changed. The end parts of each of the pair of arms 13c are connected with a movable cover 11a' and an underside closing plate 7, respectively. The accommodation part 15b is provided, near the joint between a lower end part of an end-portion closing plate 6 and an underside closing plate 7, at a height to be approximately as high as the underside closing plate 7. When opening the space portion 58, the movable cover 11a' is accommodated into the accommodation part 15b.

The movable covers 11a' are provided to be slidable (openable/closable) in the x direction along guide rails 14b which are separated from each other in the y direction and extend along the x direction. The guide rails 14b are provided to project from the underside closing plates 7 into the space portion 58. As shown in Fig. 7, each guide rail 14b has an upper part fixed to an underside closing plate 7 and a lower part forming guide parts 14b1 which protrude to both sides in the y direction and extend along the x direction. The guide parts 14b1 of each guide rail 14b are placed in a space portion 11a2 formed to extend along the x direction in the movable cover 11a'. The guide parts 14b1 mutually oppositely protruding to both sides are held from above and below by sliding parts 16 in the space portion 11a2.

In the configuration described above, when a drive device 13' is driven, a pair of arms 13c spread or contract centering in the plane of an underside closing plate 7. This makes it possible to drive a movable cover 11a' in the x direction relative to the underside closing plate 7. At this time, the configuration of the guide rails 14b allows the movable cover 11a' to be slid smoothly.

The dimension in the x direction of each movable cover device 10B provided with a drive device 13' employing a spider system can be made smaller than the dimension in the x direction of a movable cover device 10A of the first example relevant for the technical understanding provided with drive devices 13 each employing a cylinder system. Therefore, a larger space portion for installing the electric device 56, etc. can be secured in the underfloor portion 54 of the railway vehicle 51.

Other effects of the railway vehicle provided with the movable cover devices 10B according to the second example relevant for the technical understanding are the same as cited for the first example relevant for the technical understanding. Namely, the air resistance against and the running energy used by the railway vehicle 51 when running at high speed can be reduced, and also maintenance and inspection of the bogies 52 can be made easily.

### Third Example relevant for the Technical Understanding

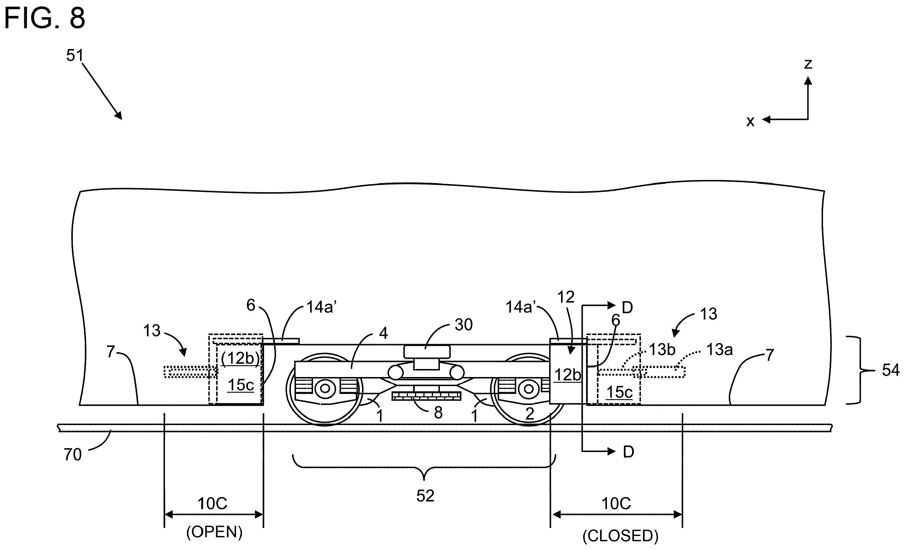

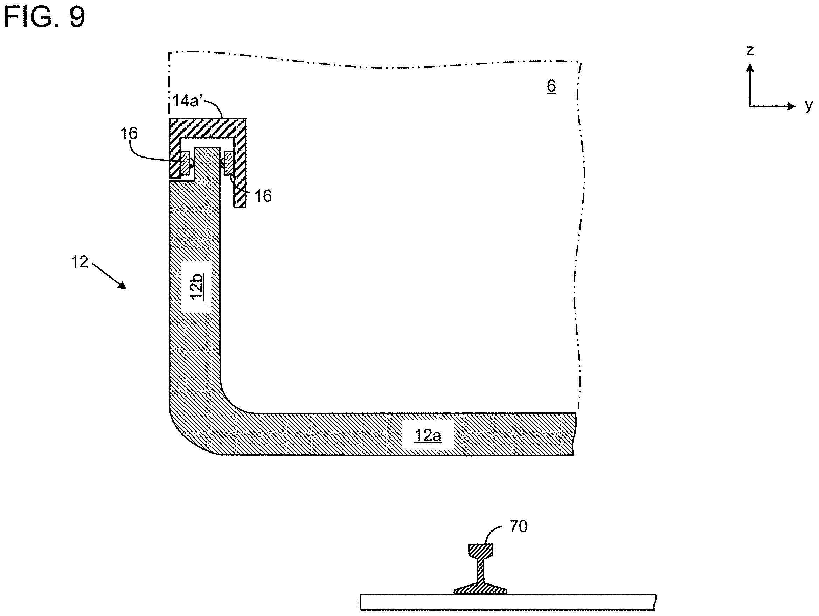

Fig. 8 is a side view of a bogie part of a railway vehicle according to a third example relevant for the technical understanding of the present invention, and Fig. 9 is a sectional view taken along line D-D in Fig. 8 (the third example relevant for the technical understanding). The third example relevant for the technical understanding will be described mainly about differences from the first and second examples relevant for the technical understanding, the same parts as those for the first and second examples relevant for the technical understanding will be denoted by the same reference signs, and the description of such parts will be omitted unless particularly required.

The movable cover devices 10C according to the third example relevant for the technical understanding each include a movable cover 12 to cover the underside and a side part of a space portion 58, an accommodation part 15c to accommodate the movable cover 12, and drive devices 13 to drive the movable cover 12. The drive devices 13 each have a cylinder system configuration as in the first example relevant for the technical understanding.

As shown in Fig. 9, the movable cover 12 integrally includes a bottom cover 12a covering a bottom portion and side covers 12b rising in the z direction continuously from both end parts in the y direction of the bottom cover 12a and covering both end parts in the y direction of the bogie 52. The configuration and covering range of the bottom cover 12a are the same as those of the movable covers 11a of the first example relevant for the technical understanding. Also, the side covers 12b cover, fully in the height direction (the z direction), the sides of the space portion 58.

The accommodation part 15c is provided in a portion on the side where an underside closing plate 7 is provided of the underfloor portion 54 so that, when opening the space portion 58, the bottom cover 12a and side covers 12b can be accommodated therein. The portion to accommodate the bottom cover 12a of the accommodation part 15c is provided to be approximately as high as around where an end-portion closing plate 6 and an underside closing plate 7 are joined (that is, approximately as high as the underside closing plates 7). The portions to accommodate the side covers 12b are provided along the sides of the underfloor portion 54.

Though not shown, the bottom of the bottom cover 12a is guided in the x direction using the configuration of the guide rails 14B shown in Fig. 7 described in connection with the second example relevant for the technical understanding. Also, the end parts in the z direction of the side covers 12b are guided by guide rails 14a' provided on both sides (surface parts on both sides) in the y direction of the underframe 55 of the railway vehicle 51. The guide rails 14a' are provided at both end parts in the y-direction as shown in Fig. 9, and are U-shaped with the lower side open. The upper end part of each side cover 12b is held by a guide rail 14a' by being held from left and right each via a sliding part 16.

The movable cover 12 is moved in the x direction by the drive devices 13. This causes the space portion 58 to be partly closed by the bottom cover 12a and the side covers 12b, so that the open portion of the space portion 58 is reduced. When opening the space portion 58, the movable cover 12 is accommodated in the accommodation part 15c.

Therefore, in addition to having the advantageous effects described in connection with the first and second examples relevant for the technical understanding, the railway vehicle 51 provided with the movable covers 12 can suppress, by means of the side covers 12b, hitting of wind flows against the sides (both end parts in the y direction) of each bogie 52. This reduces the running resistance of the railway vehicle 51 to realize energy saving. Furthermore, the side covers 12 suppress the propagation of noise generated in the space portion 58 to outside, so that the extra-vehicle noise generated when the railway vehicle 51 runs can be reduced.

The first embodiment is the first example relevant for the technical understanding, wherein the movable cover includes a pair of bottom covers which approximately fully cover a bottom part of the space portion 58 and a slit portion for avoiding interference with a wheel 2 that the bogie 52 is provided with.

The second embodiment is the second example relevant for the technical understanding, wherein the movable cover includes a pair of bottom covers which approximately fully cover a bottom part of the space portion 58 and a slit portion for avoiding interference with a wheel 2 that the bogie 52 is provided with.

The third embodiment is the third example relevant for the technical understanding, wherein the movable cover includes a pair of bottom covers which approximately fully cover a bottom part of the space portion 58 and a slit portion for avoiding interference with a wheel 2 that the bogie 52 is provided with.

### Fourth Embodiment

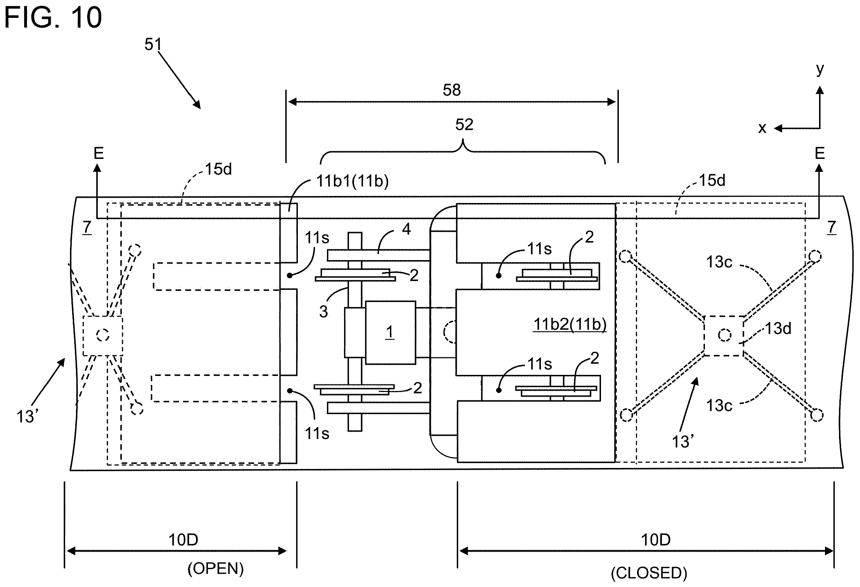

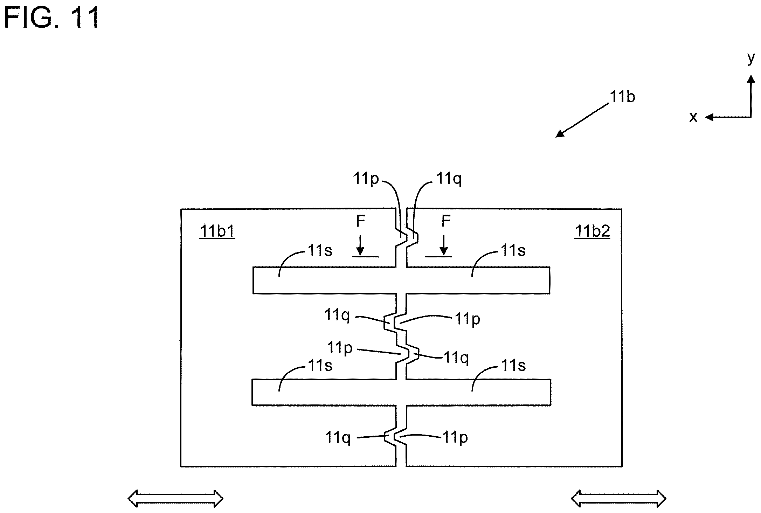

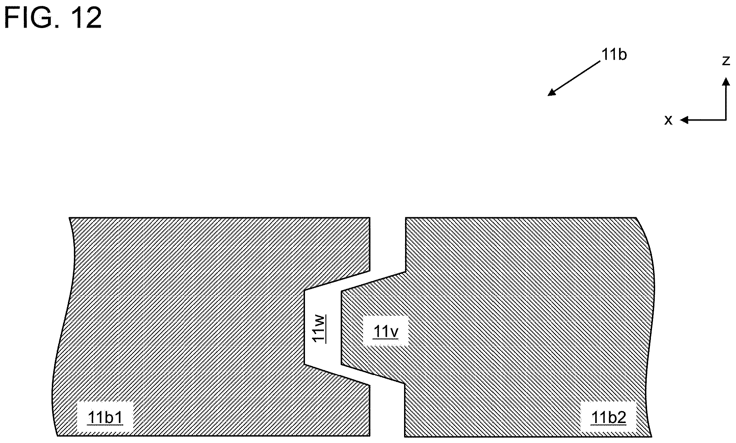

Fig. 10 is a bottom view of a bogie part of a railway vehicle according to a fourth embodiment of the present invention. Fig. 11 is a plan view of a bottom cover according to the fourth embodiment of the present invention, and Fig. 12 is a sectional view taken along line F-F in Fig. 11 (the fourth embodiment).

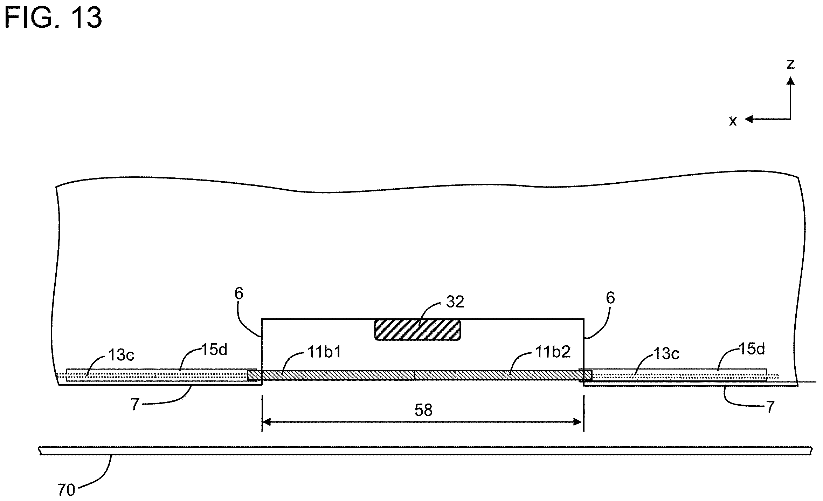

Fig. 13 is a sectional view taken along line E-E in Fig. 10 (the fourth embodiment). The fourth embodiment will be described mainly about differences from the first to third embodiments, the same parts as those for the first to third embodiments will be denoted by the same reference signs, and the description of such parts will be omitted unless particularly required.

Movable cover devices 10D of the fourth embodiment each include a movable cover 11b to cover a space portion 58, an accommodation part 15d to accommodate the movable cover 11b, and a drive device 13' to drive the movable cover 11b. Also, according to the fourth embodiment, no windbreak plate 8 is provided.

As shown in Fig. 10, the movable cover 11b is provided in a railway vehicle 51 in a manner of being divided into two, a first bottom cover 11b1 and a second bottom cover 11b2, in the x direction. The first bottom cover 11b1 moves in a manner of horizontally protruding from a portion on the side of an underside closing plate 7 of the underfloor portion 54, and the second bottom cover 11b2 in a manner of horizontally protruding from a portion on the side of the other underside closing plate 7 of the underfloor portion 54. The movable cover 11b can close the space portion 58 by bringing the leading end parts of the first bottom cover 11b1 and second bottom cover 11b2 into abutting contact. When this occurs, the underside of the space portion 58 is fully covered. For this, the first bottom cover 11b1 and the second bottom cover 11b2 each have two slit portions 11s formed in two rows along the x direction so as to avoid interference between the bottom covers and wheels 2 of the bogie 52. The slit portions 11s are open each at one end on the side of the leading end part in the x direction of the first bottom cover 11b1 or second bottom cover 11b2. When the space portion 58 is closed by the movable cover 11b, wheels 2 protrude downward through the slit portions 11s.

Each accommodation part 15d is provided in a portion on the side of an underside closing plate 7 of the underfloor portion 54 to be approximately in parallel with the underframe 55 in a height position (in the z direction) the same as the accommodation parts 15a of the first embodiment. When the space portion 58 is not closed (left open), the first bottom cover 11b1 is accommodated in the accommodation part 15d on the side of an underside closing plate 7 in the x direction and the second bottom cover 11b2 is accommodated in the accommodation part 15d on the side of the other underside closing plate 7 in the x direction. This keeps the space portion 58 open.

The drive device 13' employs a spider system the same as in the second embodiment. The drive device 13' includes a pair of arms 13c intersecting in an x-y plane, and an arm drive device 13d to drive the arms 13c. A drive device 13' is included in each of the first bottom cover 11b1 and the second bottom cover 11b2, and, each pair of arms 13c is connected, at end parts thereof, with the movable cover 11b (the first bottom cover 11b1 or the second bottom cover 11b2) and an underside closing plate 7, respectively.

The end faces of the first bottom cover 11b1 and the second bottom cover 11b2 which mutually oppose when the bottom covers are closed are provided with concaves and convexes which engage when both covers 11b1 and 11b2 are closed. When viewed in an x-y plane (see Fig. 11), the opposing end faces of the two bottom covers 11b1 and 11b2 are provided with plural mutually engaging concaves 11q and convexes 11p (alternatingly four each). Also, when viewed in an x-z plane (see Fig. 12), mutually engaging concave 11w and convex 11v are provided. Each concave 11q has a pair of inclined parts on both sides in the y direction, the distance between which spreading in the y direction toward the open side. Each convex 11p has a pair of inclined parts on both sides in the y direction, the distance between which narrowing in the y direction toward the protruding side. The concave 11w has a pair of inclined parts on both sides in the z direction, the distance between which spreading in the z direction toward the open side. The convex 11v has a pair of inclined parts on both sides in the z direction, the distance between which narrowing in the z direction toward the protruding side. By approximately aligning the angles of their inclined parts, they can serve as guides for appropriate positioning.

When the two bottom covers 11b1 and 11b2 are closed, the engagement between concaves 11q and convexes 11p suppresses misalignment by preventing shifting in the y direction. Also, the engagement between the concave 11w and the convex 11v suppresses misalignment by preventing shifting in the z direction. Since these allow the movable cover 11b to have a continuous surface, the generation of aerodynamic noise from where the two bottom covers 11b1 and 11b2 oppose each other can be suppressed. Furthermore, the increase of running resistance attributable to air turbulence generated where the two bottom covers 11b1 and 11b2 oppose each other can be suppressed.

In the above configuration, the air flow 80a under an underside closing plate 7 as shown in Fig. 1 does not flow into the space portion 58 accommodating the bogie 52. Therefore, the generation of an air flow 80b in a space portion above the bogie 52 can be prevented. Furthermore, hitting of the air flow 80a against the end-portion closing plate 6 on the downstream side of the bogie 52 can be suppressed. These make it possible to reduce the running energy of the railway vehicle 51 so as to promote energy saving. Furthermore, the propagation to the surrounding area of noise generated by joints, etc. bridged between the main motors 1 and axles 3 is blocked and suppressed by the movable cover 11b, so that vehicle exterior noise is reduced.

### Fifth Embodiment

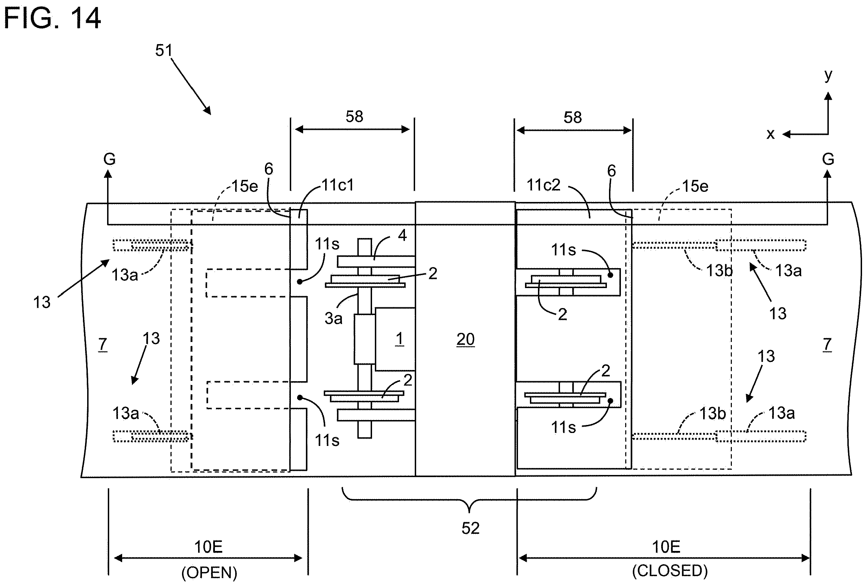

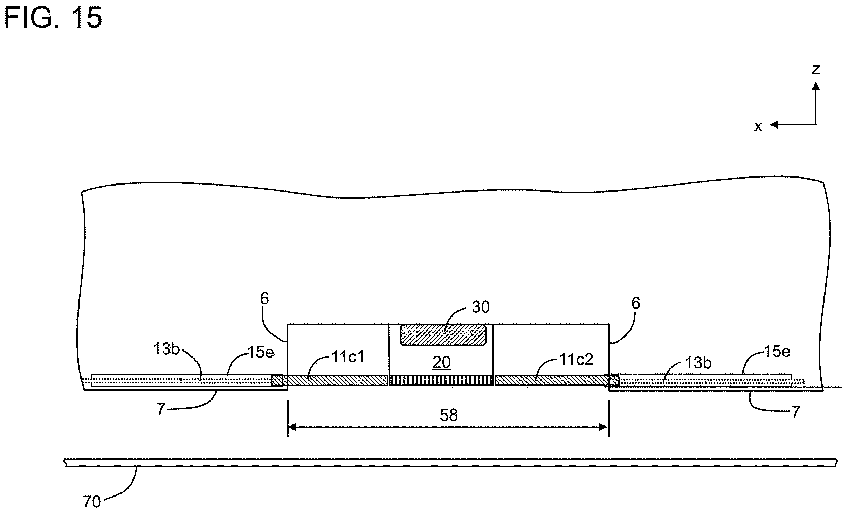

Fig. 14 is a bottom view of a bogie part of a railway vehicle according to a fifth embodiment of the present invention, and Fig. 15 is a sectional view taken along line G-G in Fig. 14 (the fifth embodiment). The fifth embodiment will be described mainly about differences from the first to fourth embodiments, the same parts as those for the first to fourth embodiments will be denoted by the same reference signs, and the description of such parts will be omitted unless particularly required.

Movable cover devices 10E according to the fifth embodiment include movable covers 11c1 and 11c2 to cover the underside of a space portion 58, accommodation parts 15e to accommodate the movable covers 11c1 and 11c2, and drive devices 13 to drive the movable covers 11c1 and 11c2. Furthermore, the space portion 58 where a bogie 52 of a railway vehicle 51 is positioned is provided, in a central portion in the x direction, with a bogie bottom cover 20 which is a fixed cover. The drive devices 13 each have a cylinder system configuration as in the first embodiment.

The bogie bottom cover 20 extends, in the y direction, from end to end of the space portion 58, reaching from one side of the bogie 52 to the other side via the bottom part of the bogie 52. The upper end parts of side plates erected at both ends in the y direction of the bogie cover 20 are connected to both end parts in the y direction of the underframe (floor) 55 (see Fig. 1). The bogie bottom cover 20 has the same effects as a windbreak plate 8 (see Fig. 2) provided, under a center portion, both in the x direction and in the y direction, of a bogie 52. In the fourth embodiment, therefore, no windbreak plate 8 is provided.

The movable cover 11c1 covers the bottom of a portion of the space portion 58, the portion ranging in the x direction from the lower end part of an end-portion closing plate 6 to the opposing end part of the bogie bottom cover 20. The movable cover 11c2 covers the bottom of another portion of the space portion 58, the another portion ranging in the x direction from the lower end part of the other end-portion closing plate 6 to the opposing end part of the bogie bottom cover 20. Therefore, the dimension in the x direction of the movable covers 11c1 and 11c2 is smaller by the length in the x direction of the bogie bottom cover 20 compared with the bottom covers 11b1 and 11b2 of the fourth embodiment. In the y direction, the movable covers 11c1 and 11c2 fully cover the space portion 58. Also, not to interfere with the wheels 2, the movable covers 11c1 and 11c2 each have two slit portions 11s which are positioned correspondingly to the wheels 2 and are open toward the wheels 2.

Each accommodation part 15e is provided in a portion on the side of an underside closing plate 7 of the underfloor portion 54 to be approximately in parallel with the underframe 55 in a height position (in the z direction) the same as the accommodation parts 15a of the first embodiment. In a state where the space portion 58 is not closed, the movable cover 11c1 is accommodated in the accommodation part 15e on the side of an underside closing plate 7 in the x direction. Also, the movable cover 11c2 is accommodated in the accommodation part 15e on the side of the other underside closing plate 7 in the x direction. This keeps the space portion 58 open.

When the space portion 58 is closed by the movable covers 11c1 and 11c2, the bottom of the bogie 52 configures a continuous surface ranging from an underside closing plate 7 of the railway vehicle 51 to the other underside closing plate 7 of the railway vehicle 51 via the movable cover 11c1, the bogie bottom cover 20 and the movable cover 11c2.

In the above configuration, the air flow 80a under an underside closing plate 7 (see Fig. 1) does not flow into the space portion 58 accommodating the bogie 52. Therefore, the generation of an air flow 80b in a space portion above the bogie 52 can be prevented. Furthermore, hitting of the air flow 80a against the end-portion closing plate 6 on the downstream side of the bogie 52 can be suppressed. These make it possible to reduce the running energy of the railway vehicle 51 so as to promote energy saving. Furthermore, the propagation to the surrounding area of noise generated by joints, etc. bridged between the main motors 1 and axles 3 is blocked and suppressed by the movable covers 11c1 and 11c2, so that vehicle exterior noise is reduced. Also, since the movable covers 11c1 and 11c2 can also keep the space portion 58 open, the bogie 52 can be maintained and inspected easily.

### Sixth Embodiment

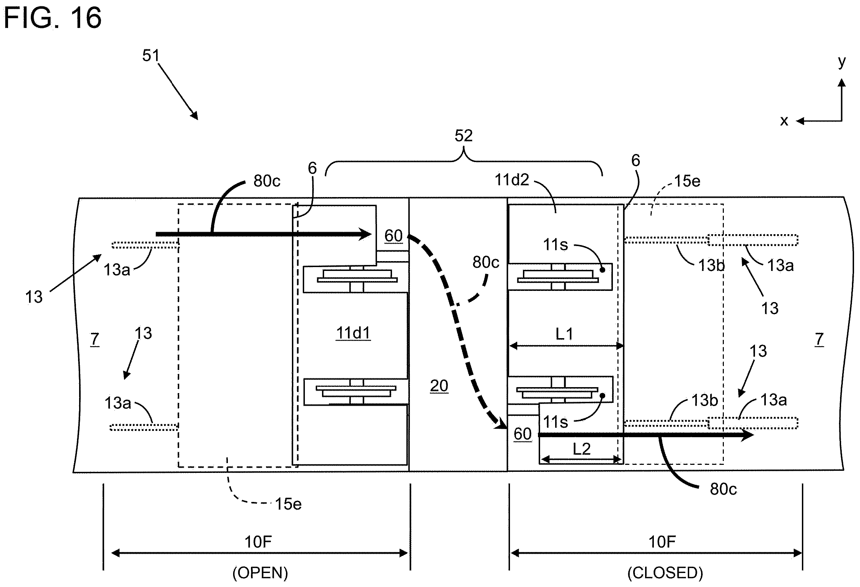

Fig. 16 is a bottom view of a bogie part of a railway vehicle according to a sixth embodiment of the present invention. The sixth embodiment will be described mainly about differences from the first to fifth embodiments, the same parts as those for the first to fifth embodiments will be denoted by the same reference signs, and the description of such parts will be omitted unless particularly required.

Movable cover devices 10F according to the sixth embodiment include movable covers 11d1 and 11d2 to cover a space portion 58, accommodation parts 15e to accommodate the movable covers 11d1 and 11d2, and drive devices 13 to drive the movable covers 11d1 and 11d2. Furthermore, the space portion 58 where a bogie 52 of a railway vehicle 51 is accommodated is provided, in a central portion in the x direction, with a bogie bottom cover 20 which is a fixed cover similar to that of the fifth embodiment. The drive devices 13 each have a cylinder system configuration as in the first embodiment.

The movable covers 11d1 and 11d2 are, as a whole, configured similarly to the movable covers 11c1 and 11c2 of the fifth embodiment. Similarly to the fifth embodiment, not to interfere with the wheels 2, the movable covers 11d1 and 11d2 each have two slit portions 11s which are positioned correspondingly to the wheels 2 and are open toward the wheels 2. The accommodation parts 15e are the same as in the fifth embodiment.

Also, the movable covers 11d1 and 11d2 each have a portion on the side of one end in the y direction, being outward of the slit portion 11s on the same side, with a dimension L2 in the x direction of the portion (the dimension from the end-portion closing plate 6 on the corresponding side to the opposing end of the movable cover in a state of closing the space portion 58) being smaller than a dimension L1 in the x direction at the center in the y direction of the movable cover. In this configuration, when the movable covers 11d1 and 11d2 are slid out and the space portion 58 is closed, an opening 60 is formed between the end part of each of the portions with a dimension L2 in the x direction and the bogie bottom cover 20. Namely, an opening 60 is formed at an end part on one side in the y direction of the movable cover 11d1 and also at an end part on the other side in the y direction of the movable cover 11d2. Thus, the openings 60, which are spaced apart in the x direction of the railway vehicle 51, are formed one to be at one end in the y direction and the other to be at the other end in the y direction of the railway vehicle 51.

With the pair of openings 60 formed as described above, a part of an air flow 80c flowing under an underside closing plate 7 of the railway vehicle 51 enters the space portion 58 through an opening 60 formed by a movable cover 11d1. After entering the space portion 58, the part of the air flow 80c cools the main motors 1 that the bogie 52 is provided with, then flows out through the other opening 60 formed by the movable cover 11d2 and flows away toward under the underside closing plate 7 on the other side.

In the above configuration, a part of the air flow 80c flowing under an underside closing plate 7 enters the space portion 58 accommodating the bogie 52 and can effectively cool the main motors 1. Furthermore, most of the air flow 80c does not enter the space portion 58. Therefore, the generation of an air flow 80b above the bogie 52 and an air flow 80a hitting the end-portion closing plate 6 on the downstream side as shown in Fig. 1 can be suppressed. This makes it possible to reduce the running energy of the railway vehicle 51 and promote energy saving.

Furthermore, the propagation to the surrounding area of noise generated by joints, etc. bridged between the main motors 1 and axles 3 is blocked and suppressed by the movable covers 11d1 and 11d2, so that vehicle exterior noise is reduced. Also, since the movable covers 11d1 and 11d2 can also keep the space portion 58 open, the bogie 52 can be maintained and inspected easily.

### [Flowchart]

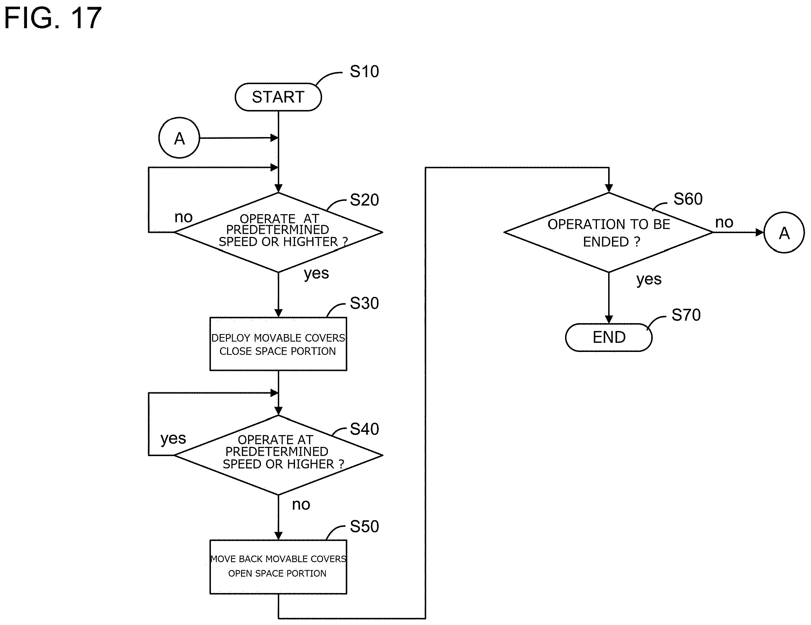

Fig. 17 is an example of a flowchart showing a method of controlling cover drive devices applied to a railway vehicle according to the present invention. The flowchart shown in Fig. 17 is for when opening/closing the movable covers (11a, 11a', 11b, 11c1, 11c2, 11d1, 11d2, and 12) described above in connection with the first to sixth embodiments. The control processing can be performed, for example, at a control section provided in the railway vehicle 51.

In step S10, processing is started.

Next, in step S20, whether or not the railway vehicle 51 is being operated at a predetermined speed or higher is determined. When it is determined in step S20 that the vehicle is not being operated at a predetermined speed or higher, processing returns to a processing level above step S20, and a state with the movable covers not closed (a state with the space portion 58 open) is maintained. When it is determined in step S20 that the vehicle is being operated at a predetermined speed or higher, processing advances to the next step S30.

In step S30, by driving the drive devices 13 or 13', the movable covers are deployed, and the space portion 58 is partly or fully closed.

When running at a predetermined speed or higher, the railway vehicle 51 runs on a main line where the radius of curvature is set to be equal to or larger than a predetermined value and does not run on a track with a small radius of curvature. Therefore, when the railway vehicle runs meeting the condition, turning of the bogie 52 in a horizontal plane remains in a narrow range. With the processing configured including step S20 (vehicle is operated at a predetermined speed or higher) and step S30 (movable covers are deployed (space portion 58 is closed)), cases in which the movable covers are deployed are limited to when the turning in a horizontal plane of the bogie 52 is of a small degree. This makes it possible, for example, to make the dimension in the y direction of each slit portion 11s formed in the movable covers smaller to reduce the running resistance and to, thereby, more effectively suppress the increase of noise. If fixed covers are used (instead of the movable covers), it is necessary to make the dimension in the y direction of each slit portion 11s larger so as to allow, during low-speed running, large turning of the bogie 52. In such cases, it is difficult to effectively suppress the increase of running resistance and the generation of noise.

Next, in step S40, whether or not the railway vehicle is being operated at a predetermined speed or higher is determined. When, in step S40, it is determined that the railway vehicle is being operated at a predetermined speed or higher, processing returns to a processing level above step S40, and a state with the movable covers closed (deployed) (a state with the space portion 58 partly or fully closed) is maintained. When it is determined in step S40 that the vehicle is not being operated at a predetermined speed or higher, processing advances to the next step S50.

In step S50, by driving the drive devices 13 or 13', the movable covers are moved back (retreated), and the space portion 58 is set open.

In step S60, whether or not the operation of the railway vehicle 51 is to be ended is determined. When, in step S60, it is determined that the operation is not to be ended, processing returns to step S20. When, in step S60, it is determined that the operation is to be ended, the operation is ended in step S70, maintaining a state with the movable covers not closed (a state with the space portion 58 open). When the railway vehicle 51 is returned to an inspection and repair shed, the space portion 58 is not covered with the movable covers, so that the bogie 52 and surrounding parts can be easily inspected.

The present invention is not limited to the above embodiments and includes various modifications. For example, the above embodiments have been described in detail to make the invention easily understandable and are not necessarily limited to those with all the described configurations. It is also possible to replace a part of a configuration of an embodiment with a configuration of another embodiment or to add a configuration of an embodiment to a configuration of another embodiment. Also, an embodiment may be partly added to by another configuration or may be partly deleted or replaced by another configuration.

For example, a movable cover 12 has been described as integrally including a bottom cover 12a and side covers 12b, but it may be configured with separable parts. Also, the movable cover 12 may be attached with a sound absorbing material which absorbs noise.

### List Of Reference Signs

1 ··· Main motor, 2 ··· Wheel, 3 ··· Axle, 4 ··· Bogie frame, 5 ··· Center pin, 6 ··· End-portion closing plate, 7 ··· Underside closing plate, 8 ··· Windbreak plate, 10A-10F ··· Movable cover device, 11a, 11a', 11b, 11c1, 11c2, 11d1, 11d2, 12 ··· Movable cover, 11b1 ··· First bottom cover, 11b2 ··· Second bottom cover, 12a ··· Bottom cover, 12b ··· Side cover, 13, 13' ··· Drive device, 13a ··· Cylinder, 13b ··· Rod, 13c ··· Arm, 13d ··· Arm drive device, 14a, 14a', 14b ··· Guide rail, 15a-15e ··· Accommodation part, 16 ··· Sliding part, 20 ··· Bogie bottom cover, 51 ··· Railway vehicle, 52 ··· Bogie, 53 ··· Passenger room, 54 ··· Underfloor portion, 55 ··· Underframe (floor), 56 ··· Electric device, 58 ··· Space portion (cavity portion), 60 ··· Opening, 70 ··· Railway track, 80a, 80b, 80c ··· Air flow

## Claims

1. A railway vehicle (51) comprising a body, a bogie (52) to support the body, and a movable cover device (10A-10F),
wherein the body includes a passenger room (53) provided above an underframe (55), the underframe (55) making up a floor, and an underfloor portion (54) provided below the underframe (55),
wherein the underfloor portion (54) is provided with a space portion (58) to accommodate the bogie (52),
wherein the space portion (58) is formed in space partitioned by an end-portion closing plate (6) rising in a height direction from an end part on the bogie side of an underside closing plate (7), the underside closing plate (7) being provided downward of the underframe (55) to be approximately in parallel with the underframe (55), and an underside of the underframe (55),
wherein the movable cover device (10A-10F) includes a movable cover (11a, 11a', 11b, 11c1, 11c2, 11d1, 11d2, 12) to cover an underside of the space portion (58) at least partly from a lower end part of the end-portion closing plate (6), an accommodation part (15a-15e) to accommodate the movable cover (11a, 11a', 11b, 11c1, 11c2, 11d1, 11d2, 12), and a drive device (13, 13') to drive the movable cover (11a, 11a', 11b, 11c1, 11c2, 11d1, 11d2, 12),
**characterized by:**
the movable cover (11a, 11a', 11b, 11c1, 11c2, 11d1, 11d2, 12) including a pair of bottom covers (11b1, 11b2) approximately fully covering a bottom part of the space portion (58) and a slit portion for avoiding interference with a wheel (2) that the bogie (52) is provided with.

2. The railway vehicle (51) according to claim 1,
wherein, the movable cover (11a, 11a', 11b, 11c1, 11c2, 11d1, 11d2, 12) and the drive device (13, 13') are configured to switch between a state with the underside of the space portion (58) at least partly covered and a state with the underside of the space portion (58) not covered, by moving the movable cover (11a, 11a', 11b, 11c1, 11c2, 11d1, 11d2, 12) using the drive device (13, 13').

3. The railway vehicle (51) according to claim **1,**
wherein an accommodation part (15a-15e) is provided, to be approximately as high as the underside closing plate (7) and to be approximately in parallel with the underframe (55), where a lower end part of the end-portion closing plate (6) and an end part in a longitudinal direction of the underside closing plate (7) are joined.

4. The railway vehicle (51) according to claim **1,**
wherein the underside closing plate (7) is provided with guide rails to guide the movable cover (11a, 11a', 11b, 11c1, 11c2, 11d1, 11d2, 12) in a longitudinal direction of the railway vehicle (51), and
wherein the guide rails guide the movable cover (11a, 11a', 11b, 11c1, 11c2, 11d1, 11d2, 12) slidably on both sides in a width direction of the railway vehicle (51).

5. The railway vehicle (51) according to claim 1,
wherein the drive device (13, 13') uses a spider system, the spider system including a pair of arms and an arm drive device to drive the arms, and
wherein the arms have a center positioned in a plane of the underside closing plate (7) and drive the movable cover (11a, 11a', 11b, 11c1, 11c2, 11d1, 11d2, 12).

6. The railway vehicle (51) according to claim 1,
wherein the movable cover (11a, 11a', 11b, 11c1, 11c2, 11d1, 11d2, 12) is integrally provided with side covers rising in a height direction from the end part on the bogie side of the underside closing plate (7) and the lower end part of the end-portion closing plate (6) in a width direction of the movable cover (11a, 11a', 11b, 11c1, 11c2, 11d1, 11d2, 12).

7. The railway vehicle (51) according to claim 1,
wherein the pair of bottom covers (11b1, 11b2) are provided, on mutually opposing end parts thereof, with concave and convex parts to suppress relative displacements in width and vertical directions of the railway vehicle (51), and
wherein, when the space portion (58) is closed with the pair of bottom covers (11b1, 11b2), the concave and convex parts mutually engage.

8. The railway vehicle (51) according to claim 1,
wherein the railway vehicle (51) further includes a bogie bottom cover (20) that the bogie (52) is provided with, the bogie bottom cover (20) covering a central portion, in a longitudinal direction of the railway vehicle (51), of the bogie (52) and fully covering a bottom of the bogie (52) in a width direction of the railway vehicle (51), and
wherein the movable covers cover from a lower end part of one of the end-portion closing plates (6) to one end part of the bogie bottom cover (20) and from a lower end part of the other of the end-portion closing plates (6) to the other end part of the bogie bottom cover (20).

9. A method of controlling the movable cover (11a, 11a', 11b, 11c1, 11c2, 11d1, 11d2, 12) of the railway vehicle (51) according to one of claims 1 to 8, comprising:
a step wherein, when the railway vehicle (51) is running at a speed higher than a predetermined speed, the movable cover (11a, 11a', 11b, 11c1, 11c2, 11d1, 11d2, 12) covers at least a part of an underside of the space portion (58), and
a step wherein, when the railway vehicle (51) is running at a speed lower than a predetermined speed, the movable cover (11a, 11a', 11b, 11c1, 11c2, 11d1, 11d2, 12) is accommodated in the accommodation part (15a-15e), thereby opening the underside of the space portion (58).

## Patentansprüche

1. Schienenfahrzeug (51), das eine Karosserie, ein Drehgestell (52), um die Karosserie zu tragen, und eine bewegliche Abdeckvorrichtung (10A-10F) umfasst,
wobei die Karosserie einen Fahrgastraum (53), der über einem Unterrahmen (55) vorgesehen ist, der einen Boden bildet, und einen Unterbodenabschnitt (54), der unter dem Unterrahmen (55) vorgesehen ist, umfasst,
wobei der Unterbodenabschnitt (54) mit einem Raumabschnitt (58), um das Drehgestell (52) aufzunehmen, versehen ist,
wobei der Raumabschnitt (58) in einem Raum gebildet ist, der durch eine Endabschnitt-Verschlussplatte (6) unterteilt ist, die sich in einer Höhenrichtung von einer Endkomponente auf der Drehgestellseite einer Unterseiten-Verschlussplatte (7) nach oben weist, wobei die Unterseiten-Verschlussplatte (7) derart unterhalb des Unterrahmens (55) vorgesehen ist, dass sie zum Unterrahmen (55) und zu einer Unterseite des Unterahmens (55) annähernd parallel ist,
wobei die bewegliche Abdeckvorrichtung (10A-10F) eine bewegliche Abdeckung (11a, 11a', 11b, 11c1, 11c2, 11d1, 11d2, 12), um eine Unterseite des Raumabschnitts (58) ausgehend von einer unteren Endkomponente der Endabschnitt-Verschlussplatte (6) zumindest teilweise abzudecken, eine Aufnahmekomponente (15a-15e), um die bewegliche Abdeckung (11a, 11a', 11b, 11c1, 11c2, 11d1, 11d2, 12) aufzunehmen, und eine Antriebsvorrichtung (13, 13'), um die bewegliche Abdeckung (11a, 11a', 11b, 11c1, 11c2, 11d1, 11d2, 12) anzutreiben, enthält,
**dadurch gekennzeichnet, dass**:
die bewegliche Abdeckung (11a, 11a', 11b, 11c1, 11c2, 11d1, 11d2, 12) ein Paar Bodenabdeckungen (11b1, 11b2), die eine Bodenkomponente des Raumabschnitts (58) annähernd vollständig abdecken, und einen Schlitzabschnitt zum Vermeiden einer störenden Beeinflussung mit einem Rad (2), mit dem das Drehgestell (52) versehen ist, enthält.

2. Schienenfahrzeug (51) nach Anspruch 1,
wobei die bewegliche Abdeckung (11a, 11a', 11b, 11c1, 11c2, 11d1, 11d2, 12) und die Antriebsvorrichtung (13, 13') konfiguriert sind, durch Bewegen der beweglichen Abdeckung (11a, 11a', 11b, 11c1, 11c2, 11d1, 11d2, 12) unter Verwendung der Antriebsvorrichtung (13, 13') zwischen einem Zustand, in dem die Unterseite des Raumabschnitts (58) zumindest teilweise abgedeckt ist, und einem Zustand, in dem die Unterseite des Raumabschnitts (58) nicht abgedeckt ist, umzuschalten.

3. Schienenfahrzeug (51) nach Anspruch 1,
wobei eine Aufnahmekomponente (15a-15e) so vorgesehen ist, dass sie näherungsweise so hoch wie die Unterseiten-Verschlussplatte (7) ist und zum Unterrahmen (55) näherungsweise parallel ist, wobei eine untere Endkomponente der Endabschnitt-Verschlussplatte (6) und eine Endkomponente in einer Längsrichtung der Unterseiten-Verschlussplatte (7) verbunden sind.

4. Schienenfahrzeug (51) nach Anspruch 1,
wobei die Unterseiten-Verschlussplatte (7) mit Führungsschienen, um die bewegliche Abdeckung (11a, 11a', 11b, 11c1, 11c2, 11d1, 11d2, 12) in einer Längsrichtung des Schienenfahrzeugs (51) zu führen, versehen ist, und
wobei die Führungsschienen die bewegliche Abdeckung (11a, 11a', 11b, 11c1, 11c2, 11d1, 11d2, 12) auf beiden Seiten in einer Breitenrichtung des Schienenfahrzeugs (51) auf gleitfähige Weise führen.

5. Schienenfahrzeug (51) nach Anspruch 1,
wobei die Antriebsvorrichtung (13, 13') ein Sternsystem verwendet, wobei das Sternsystem ein Paar Arme und eine Antriebsvorrichtung, um die Arme anzutreiben, enthält, und
wobei die Arme einen Mittelpunkt aufweisen, der in einer Ebene der Unterseiten-Verschlussplatte (7) angeordnet sind, und die bewegliche Abdeckung (11a, 11a', 11b, 11c1, 11c2, 11d1, 11d2, 12) antreiben.

6. Schienenfahrzeug (51) nach Anspruch 1,
wobei die bewegliche Abdeckung (11a, 11a', 11b, 11c1, 11c2, 11d1, 11d2, 12) auf einteilige Weise mit Seitenabdeckungen versehen ist, die sich in einer Höhenrichtung von der Endkomponente auf der Drehgestellseite der Unterseiten-Verschlussplatte (7) und der unteren Endkomponente der Endabschnitt-Verschlussplatte (6) in einer Breitenrichtung der beweglichen Abdeckung (11a, 11a', 11b, 11c1, 11c2, 11d1, 11d2, 12) erheben.

7. Schienenfahrzeug (51) nach Anspruch 1,
wobei das Paar Bodenabdeckungen (11b1, 11b2) auf einander gegenüberliegenden Endkomponenten davon mit konkaven und konvexen Komponenten, um relative Verlagerungen in der Breitenrichtung und der vertikalen Richtung des Schienenfahrzeugs (51) zu verhindern, versehen ist, und
wobei dann, wenn der Raumabschnitt (58) mit dem Paar Bodenabdeckungen (11b1, 11b2) verschlossen ist, die konkaven und konvexen Komponenten sich wechselseitig in Eingriff befinden.

8. Schienenfahrzeug (51) nach Anspruch 1,
wobei das Schienenfahrzeug (51) ferner eine Drehgestell-Bodenabdeckung (20) enthält, mit der das Drehgestell (52) versehen ist, wobei die Drehgestell-Bodenabdeckung (20) einen Mittelabschnitt in einer Längsrichtung des Schienenfahrzeugs (51) des Drehgestells (52) abdeckt und eine Unterseite des Drehgestells (52) in einer Breitenrichtung des Schienenfahrzeugs (51) vollständig abdeckt, und
wobei die beweglichen Abdeckungen ausgehend von einer unteren Endkomponente von einer der Endabschnitt-Verschlussplatten (6) bis zu einer Endkomponente der Drehgestell-Bodenabdeckung (20) und ausgehend von einer unteren Endkomponente der anderen der Endabschnitt-Verschlussplatten (6) bis zur anderen Endkomponente der Drehgestell-Bodenabdeckung (20) abdecken.

9. Verfahren zum Steuern der beweglichen Abdeckung (11a, 11a', 11b, 11c1, 11c2, 11d1, 11d2, 12) des Schienenfahrzeugs (51) nach einem der Ansprüche 1 bis 8, das Folgendes umfasst:
einen Schritt, in dem dann, wenn das Schienenfahrzeug (51) mit einer Geschwindigkeit fährt, die höher als eine vorgegebene Geschwindigkeit ist, die bewegliche Abdeckung (11a, 11a', 11b, 11c1, 11c2, 11d1, 11d2, 12) zumindest einen Anteil einer Unterseite des Raumabschnitts (58) abdeckt, und
einen Schritt, in dem dann, wenn das Schienenfahrzeug (51) mit einer Geschwindigkeit fährt, die niedriger als eine vorgegebene Geschwindigkeit ist, die bewegliche Abdeckung (11a, 11a', 11b, 11c1, 11c2, 11d1, 11d2, 12) in der Aufnahmekomponente (15a,15e) aufgenommen wird, wodurch die Unterseite des Raumabschnitts (58) geöffnet wird.

## Revendications

1. Véhicule ferroviaire (51) comprenant un corps, un bogie (52) pour supporter le corps, et un dispositif de couverture mobile (10A-10F),
dans lequel le corps inclut un compartiment voyageurs (53) prévu au-dessus d'un châssis inférieur (55), le châssis inférieur (55) constituant un plancher, et une portion formant plancher inférieur (54) prévue en dessous du châssis inférieur (55),
dans lequel la portion formant plancher inférieur (54) est pourvue d'une portion formant espace (58) pour loger le bogie (52),
dans lequel la portion formant espace (58) est formée dans un espace cloisonné par une plaque de fermeture de portion d'extrémité (6) s'élevant dans une direction de la hauteur depuis une partie d'extrémité sur le côté bogie d'une plaque de fermeture côté inférieur (7), la plaque de fermeture côté inférieur (7) étant prévue en bas du châssis inférieur (55) de façon à être approximativement parallèle au châssis inférieur (55), et un côté inférieur du châssis inférieur (55),
dans lequel le dispositif de couverture mobile (10A-10F) inclut une couverture mobile (11a, 11a', 11b, 11c1, 11c2, 11d1, 11d2, 12) pour couvrir un côté inférieur de la portion formant espace (58) au moins partiellement depuis une partie d'extrémité inférieure de la plaque de fermeture de portion d'extrémité (6), une partie formant logement (15a-15e) pour loger la couverture mobile (11a, 11a', 11b, 11c1, 11c2, 11d1, 11d2, 12), et un dispositif d'entraînement (13, 13') pour entraîner la couverture mobile (11a, 11a', 11b, 11c1, 11c2, 11d1, 11d2, 12),
**caractérisé en ce que**
la couverture mobile (11a, 11a', 11b, 11c1, 11c2, 11d1, 11d2, 12) inclut une paire de couvertures de fond (11b1, 11b2) couvrant approximativement entièrement une partie de fond de la portion formant espace (58), et une portion formant fente pour éviter une interférence avec une roue (2) qui est prévue sur le bogie (52).

2. Véhicule ferroviaire (51) selon la revendication 1,
dans lequel la couverture mobile (11a, 11a', 11b, 11c1, 11c2, 11d1, 11d2, 12) et le dispositif d'entraînement (13, 13') sont configurés pour commuter entre un état où le côté inférieur de la portion formant espace (58) est au moins partiellement couvert et un état où le côté inférieur de la portion espace (58) est non couvert, en déplaçant la couverture mobile (11a, 11a', 11b, 11c1, 11c2, 11d1, 11d2, 12) à l'aide du dispositif d'entraînement (13, 13').

3. Véhicule ferroviaire (51) selon la revendication 1,
dans lequel une partie formant logement (15a-15e) est prévue pour être approximativement aussi haute que la plaque de fermeture côté inférieur (7) et pour être approximativement parallèle au châssis inférieur (55), où une partie d'extrémité inférieure de la plaque de fermeture de portion d'extrémité (6) et une partie d'extrémité dans une direction longitudinale de la plaque de fermeture côté inférieur (7) sont jointes.

4. Véhicule ferroviaire (51) selon la revendication 1,
dans lequel la plaque de fermeture côté inférieur (7) est pourvue de rails de guidage pour guider la couverture mobile (11a, 11a', 11b, 11c1, 11c2, 11d1, 11d2, 12) dans une direction longitudinale du véhicule ferroviaire (51), et
dans lequel les rails de guidage guident la couverture mobile (11a, 11a', 11b, 11c1, 11c2, 11d1, 11d2, 12) de manière coulissante sur les deux côtés dans une direction de la largeur du véhicule ferroviaire (51).

5. Véhicule ferroviaire (51) selon la revendication 1,
dans lequel le dispositif d'entraînement (13, 13') utilise un système toile d'araignée dit système spider, le système spider incluant une paire de bras et un dispositif d'entraînement de bras pour entraîner les bras, et
dans lequel les bras ont un centre positionné dans un plan la plaque de fermeture côté inférieur (7) et entraînent la couverture mobile (11a, 11a', 11b, 11c1, 11c2, 11d1, 11d2, 12).

6. Véhicule ferroviaire (51) selon la revendication 1,
dans lequel la couverture mobile (11a, 11a', 11b, 11c1, 11c2, 11d1, 11d2, 12) est intégralement pourvue de couvertures latérales s'élevant dans une direction de la hauteur depuis la partie d'extrémité sur le côté bogie de la plaque de fermeture côté inférieur (7) et la partie d'extrémité inférieure de la plaque de fermeture de portion d'extrémité (6) dans une direction de la largeur de la couverture mobile (11a, 11a', 11b, 11c1, 11c2, 11d1, 11d2, 12).

7. Véhicule ferroviaire (51) selon la revendication 1,
dans lequel la paire de couvertures de fond (11b1, 11b2) sont prévues, sur des parties d'extrémité mutuellement opposées de celui-ci, avec des parties concave et convexe pour supprimer des déplacements relatifs dans une direction de la largeur et une direction verticale du véhicule ferroviaire (51), et
dans lequel, quand la portion formant espace (58) est fermée avec la paire de couvertures de fond (11b1, 11b2), les parties concave et convexe s'engagent mutuellement.

8. Véhicule ferroviaire (51) selon la revendication 1,
dans lequel le véhicule ferroviaire (51) inclut en outre une couverture de fond de bogie (20) qui est prévue sur le bogie (52), la couverture de fond de bogie (20) couvrant une portion centrale, dans une direction longitudinale du véhicule ferroviaire (51), du bogie (52) et couvrant entièrement un fond du bogie (52) dans une direction de la largeur du véhicule ferroviaire (51), et
dans lequel les couvertures mobiles couvrent depuis une partie d'extrémité inférieure de l'une des plaques de fermeture de portion d'extrémité (6) jusqu'à une partie d'extrémité de la couverture de fond de bogie (20) et depuis une partie d'extrémité inférieure de l'autre des plaques de fermeture de portion d'extrémité (6) jusqu'à l'autre partie d'extrémité de la couverture de fond de bogie (20).

9. Procédé de commande de la couverture mobile (11a, 11a', 11b, 11c1, 11c2, 11d1, 11d2, 12) du véhicule ferroviaire (51) selon l'une des revendications 1 à 8, comprenant :
une étape dans laquelle, quand le véhicule ferroviaire (51) circule à une vitesse supérieure à une vitesse prédéterminée, la couverture mobile (11a, 11a', 11b, 11c1, 11c2, 11d1, 11d2, 12) couvre au moins une partie d'un côté inférieur de la portion formant espace (58), et
une étape dans laquelle, quand le véhicule ferroviaire (51) circule à une vitesse inférieure à une vitesse prédéterminée, la couverture mobile (11a, 11a', 11b, 11c1, 11c2, 11d1, 11d2, 12) est logée dans la partie formant logement (15a- 15e), ouvrant ainsi le côté inférieur de la portion formant espace (58).
